(19) Europäisches Patentamt
European Patent Office
Office européen des brevets

(11) **EP 4 332 704 A1**

(12) **EUROPÄISCHE PATENTANMELDUNG**

(43) Veröffentlichungstag:
**06.03.2024 Patentblatt 2024/10**

(21) Anmeldenummer: **22193068.8**

(22) Anmeldetag: **31.08.2022**

(51) Internationale Patentklassifikation (IPC):
**G05B 19/418** (2006.01)

(52) Gemeinsame Patentklassifikation (CPC):
**G05B 19/41865; G05B 19/41885**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens AG Österreich
1210 Wien (AT)**

(72) Erfinder: **Comploi-Taupe, Richard
3454 Sitzenberg-Reidling (AT)**

(74) Vertreter: **Siemens Patent Attorneys
Postfach 22 16 34
80506 München (DE)**

(54) **COMPUTER-IMPLEMENTIERTES VERFAHREN UND SYSTEM ZUR HERSTELLUNG EINES PRODUKTS**

(57)    Computer-implementiertes Verfahren zur Herstellung eines Produkts mithilfe von zumindest einer Produktionsvorrichtung und einer zugehörigen Konfiguration, umfassend folgende Schritte:
a) Bereitstellen eines ersten Encodings für die Herstellung des Produkts durch die zumindest eine Produktionsvorrichtung und der zugehörigen Konfiguration auf Basis von "Answer Set Programming",
b) Bereitstellen von zumindest einem zweiten Encoding auf Basis von "Answer Set Programming", welches eine Teilmenge des ersten Encodings bildet,
c) Lösen der zweiten Encodings durch einen Solver auf Basis von "Answer Set Programming",
d) Anwenden von "Inductive Logic Programming" zur Bestimmung von Regeln zur Lösung nach Schritt c),
e) Bilden einer heuristischen Repräsentation der Regeln für die Lösungen nach Schritt d),
f) Lösen des ersten Encodings als Herstellungs-Konfiguration der Produktionsvorrichtungen durch einen Solver auf Basis von "Answer Set Programming" unter Zuhilfenahme der heuristischen Repräsentation der Regeln für die Lösungen der zweiten Encodings nach Schritt e),
g) Herstellen des Produkts mithilfe der Herstellungs-Konfiguration und der Produktionsvorrichtungen.

FIG 6

EP 4 332 704 A1

**Beschreibung**

Die Erfindung betrifft ein computer-implementiertes Verfahren und ein System zur Herstellung eines Produkts mithilfe von zumindest einer Produktionsvorrichtung und einer zugehörigen Konfiguration.

"Answer Set Programming" (ASP) ist ein deklarativer Problemlösungsansatz, der in vielen industriellen und wissenschaftlichen Bereichen erfolgreich angewendet wird. Beim Lösen großer und komplexer Probleme können jedoch domänenspezifische Heuristiken erforderlich sein, um eine zufriedenstellende Leistung zu erzielen.

Daher bieten moderne ASP-Systeme Möglichkeiten, domänenspezifische Heuristiken in den Lösungsprozess zu integrieren. Eine Erweiterung beispielsweise für WASP ermöglicht externe prozedurale Heuristiken, die an bestimmten Punkten während des Lösungsprozesses über eine API konsultiert werden. Deklarative Spezifikationen domänenspezifischer Heuristiken in Form sogenannter heuristischer Direktiven werden von CLINGO und Alpha unterstützt.

Allerdings müssen solche Heuristiken bisher manuell erfunden werden. Domänenexpert*innen und ASP-Expert*innen werden benötigt, um geeignete domänenspezifische Heuristiken zu erfinden.

Unter einer Domäne wird im vorliegenden Zusammenhang beispielsweise ein Teilgebiet eines Produkts oder Wissensgebiets eines größeren, ersten Produkts oder Wissensgebiets verstanden, wie beispielsweise eine Teilmenge des Encodings in Form eines zweiten Encodings. Für die Teilmenge des ersten Encodings, also das zweite Encoding, kann beispielsweise festgestellt werden, ob sie einen Anteil am ersten Encoding hat, indem das erste und das zweite Encoding klassifiziert werden, also geprüft wird, ob Teilmerkmale jeweils in beiden Encodings vorliegen.

Es ist Aufgabe der Erfindung die Lösung von Produktions-Problemen mittels ASP zu verbessern und die Recheneffizienz zu steigern.

Die Aufgabe wird durch ein Verfahren eingangs genannter Art gelöst, wobei folgende Schritte umfasst sind und ausgeführt werden:

a) Bereitstellen eines ersten Encodings für die Herstellung des Produkts durch die zumindest eine Produktionsvorrichtung und der zugehörigen Konfiguration auf Basis von "Answer Set Programming",
b) Bereitstellen von zumindest einem zweiten Encoding auf Basis von "Answer Set Programming", welches eine Teilmenge des ersten Encodings bildet,
c) Lösen der zweiten Encodings durch einen Solver auf Basis von "Answer Set Programming",
d) Anwenden von "Inductive Logic Programming" zur Bestimmung von Regeln zur Lösung nach Schritt c),
e) Bilden einer heuristischen Repräsentation der Regeln für die Lösungen nach Schritt d),
f) Lösen des ersten Encodings als Herstellungs-Konfiguration der Produktionsvorrichtungen durch einen Solver auf Basis von "Answer Set Programming" unter Zuhilfenahme der heuristischen Repräsentation der Regeln für die Lösungen der zweiten Encodings nach Schritt e),
g) Herstellen des Produkts mithilfe der Herstellungs-Konfiguration und der Produktionsvorrichtungen.

Durch die Anwendung von "Inductive Logic Programming" (ILP) auf kleine, aber repräsentative Problem-Instanzen sowie deren (nahezu-)optimale Answer Sets wird erreicht, dass zusätzliches Wissen über das Problem in der Form von ASP-Regeln gelernt wird. Diese Regeln werden in der vorliegenden Erfindung in eine heuristische Repräsentation überführt.

Die Funktionsweise von ASP ist im Stand der Technik bekannt und der Inhalt folgender Veröffentlichungen wird durch Bezugnahme als Teil der Offenbarung der Erfindung mit einbezogen:

M. Gelfond, Y. Kahl, Knowledge Representation, Reasoning, and the Design of Intelligent Agents: The Answer-Set Programming Approach, Cambridge University Press, New York, NY, USA, 2014, und

V. Lifschitz, Answer Set Programming, Springer, 2019, doi:10.1007/978-3-030-24658-7, sowie

M. Gebser, R. Kaminski, B. Kaufmann, T. Schaub, Answer Set Solving in Practice, Synthesis Lectures on Artificial Intelligence and Machine Learning, Morgan and Claypool Publishers, 2012, und

C. Baral, Knowledge Representation, Reasoning and Declarative Problem Solving, Cambridge University Press, 2003.

Die Heuristiken im Schritt c) können vorteilhaft verwendet werden, um die Lösungs-Performance beziehungsweise Lösungs-Effizienz und die Lösungs-Qualität von größeren, härteren Problem-Instanzen zu verbessern.

Die Verwendung von ILP, nämlich um deklarative Spezifizierungen von Heuristiken zu lernen, liefert den besonderen Vorteil der Erfindung und kann den Rechenaufwand bei der Lösung eines ASP-Encodings beziehungsweise Instanzen durch einen ASP-Solver erheblich vereinfachen und die Recheneffizienz signifikant steigern. Neben der verkürzten Rechenzeit kann auch Speicher bei der Berechnung eingespart werden, was die Systemkomplexität verbessern kann.

Die Funktionsweise von ILP ist im Stand der Technik bekannt und der Inhalt folgender Veröffentlichungen wird durch Bezugnahme als Teil der Offenbarung der Erfindung mit einbezogen:

M. Law, A. Russo, K. Broda, The ILASP system for inductive learning of answer set programs, CoRR abs/2005.00904 (2020). arXiv:2005.00904, und

M. Law, Conflict-driven inductive logic programming, Theory and Practice of Logic Programming (2022). doi:10.1017/S1471068422000011.

Ein oder mehrere Verfahrens-Schritte sind in einer Rechenvorrichtung mit einem Prozessor und einem Speicher implementiert.

In einer Weiterbildung der Erfindung ist es vorgesehen, dass das erste Encoding eine Beschreibung des Produkts, insbesondere dessen Menge an Komponenten des Produkts und deren Konfiguration, und eine Beschreibung der zumindest einen Produktionsvorrichtung, insbesondere deren Menge an Maschinen und deren Konfiguration, und vorzugsweise erste Constraints umfasst.

In einer Weiterbildung der Erfindung ist es vorgesehen, dass das zumindest eine zweite Encoding eine Beschreibung eines Teils des Produkts, insbesondere dessen Menge an Komponenten des Teils des Produkts und deren Konfiguration, und eine Beschreibung der zumindest einen Produktionsvorrichtung, insbesondere deren Menge an Maschinen und deren Konfiguration, und vorzugsweise zweite Constraints umfasst.

In einer Weiterbildung der Erfindung ist es vorgesehen, dass die heuristische Repräsentation der Regeln im Schritt e) durch einen Kopf und einen Körper, jeweils für eine Regel, gebildet ist.

Die erfindungsgemäße Aufgabe wird auch durch ein Herstellungs-System eingangs genannter Art gelöst, umfassend zumindest eine Produktionsvorrichtung und eine zugehörige Konfiguration, eine Rechenvorrichtung mit einem Speicher, wobei die Produktionsvorrichtung und die Rechenvorrichtung dazu eingerichtet sind, das erfindungsgemäße Verfahren auszuführen.

Die erfindungsgemäße Aufgabe wird durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:

Fig. 1a     ein Beispiel für eine HRP Instanz,

Fig. 1b     Lösungen zur HRP Instanz nach Fig. 1a,

Fig. 2      ein Beispiel für einen Programmcode eines Mode Bias eines HRP,

Fig. 3      ein vereinfachtes Beispiel für eine Lernaufgabe für HRP,

Fig. 4      ein Beispiel für einen Programmcode eines Full Mode Bias eines HRP,

Fig. 5      eine Tabelle mit experimentell ermittelten optimierungs-Ergebnissen von erlernten Heuristiken und deren relative Verbesserung,

Fig. 6      ein Ausführungsbeispiel für ein Ablaufdiagramm des erfindungsgemäßen Verfahrens.

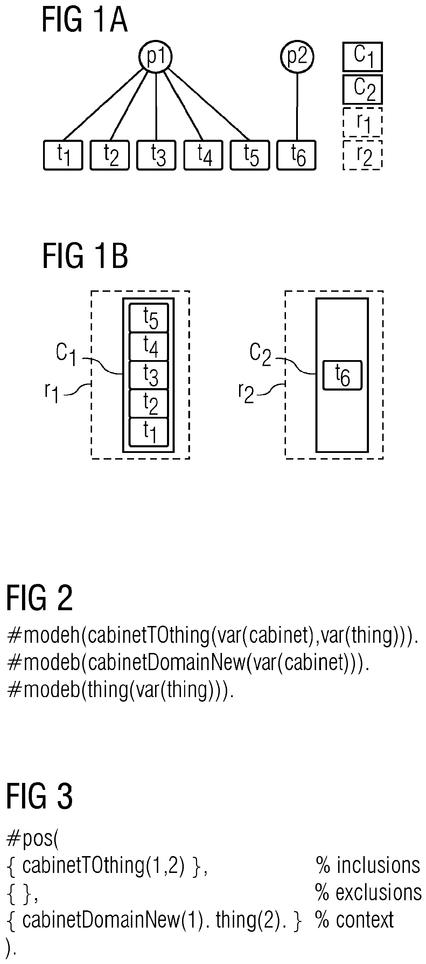

**Fig.** 1a stellt ein Beispiel für eine HRP Instanz dar.

Das "House Reconfiguration Problem" (HRP) ist eine abstrahierte Version industrieller (Re-)Konfigurationsprobleme, wie eine Rack-Konfiguration.

Details dazu können der Veröffentlichung A. Ryabokon, Knowledge-based (Re)configuration of Complex Products and Services, Ph.D. thesis, Alpen-Adria-Universität Klagenfurt, 2015 genannt (URL: http://netlibrary.aau.at/urn:nbn:at:at-ubk:1-26431, abgerufen am 19.8.2022), sowie der Veröffentlichung G. Friedrich, A. Ryabokon, A. A. Falkner, A. Haselböck, G. Schenner, H. Schreiner, (re)configuration using answer set programming, in: K. M. Shchekotykhin, D. Jannach, M. Zanker (Eds.), Proceedings of the IJCAI 2011 Workshop on Configuration, Barcelona, Spain, July 16, 2011, volume 755 of CEUR Workshop Proceedings, CEUR-WS.org, 2011, pp. 17-24. URL: http://ceur-ws.org/Vol-755/paper03.pdf, abgerufen am 24.8.2022, entnommen werden.

Formal ist HRP als Modifikation des "House Configuration Problem" (HCP) definiert.

Das "House Configuration Problem" (HCP) wird definiert, wobei die Eingabe für HCP durch vier Gruppen von Konstanten **P**, **T**, **C** und **R** erfolgt, die Personen **P**, Dinge **T**, Schränke **C** bzw. Räume **R** darstellen, und eine Eigentumsbeziehung PT $\subseteq$ **P** x **T** zwischen Personen und Dingen.

Die Aufgabe besteht darin, eine Zuordnung von Sachen zu Schränken TC $\subseteq$ **T** x **C** und von Schränken zu Räumen CR $\subseteq$ **C** x **R** zu finden, so dass:

(1) jede Sache in einem Schrank aufbewahrt wird;

(2) ein Schrank enthält höchstens fünf Dinge;

(3) jeder Schrank wird in einem Raum aufgestellt;

(4) ein Raum enthält höchstens vier Schränke; und

(5) ein Raum darf nur Schränke enthalten, in denen Sachen einer Person aufbewahrt werden.

Das "House Reconfiguration Problem" (HRP) wird definiert, wobei die Eingabe für HRP durch eine HCP-Instanz **H** = $\langle P, T, C, R, PT \rangle$, eine Legacy-Konfiguration (TC',CR') und eine Reihe von Dingen **T'** $\subseteq$ **T** definiert wird, die als "lang" definiert sind (alle anderen Dinge sind "kurz").

Die Aufgabe besteht dann darin, eine Zuordnung von Dingen zu Schränken TC $\subseteq$ **T** $\times$ **C** und Schränken zu Räumen CR $\subseteq$ **C** $\times$ **R** zu finden, die alle Anforderungen von HCP sowie die folgenden erfüllt:

(1) Ein Schrank ist entweder klein oder hoch;

(2) ein langes Ding kann nur in einen hohen Schrank gestellt werden;

(3) ein kleiner Schrank belegt 1 und ein hoher Schrank 2 von 4 verfügbaren Plätzen in einem Raum;

(4) Alle alten Schränke sind klein.

Die in Fig. 1a gezeigte beispielhafte HRP-Instanz umfasst zwei Schränke c1 und c2, zwei Räume r1 und r2, fünf Dinge t1-t5, die der Person p1 gehören, und ein Ding t6, die der Person p2 gehört. Eine Legacy-Konfiguration ist leer, und alle Dinge sind klein. Bei einer Lösung werden die Sachen der ersten Person in Schrank c1 im ersten Raum und die Sachen der zweiten Person in Schrank c2 im zweiten Raum gestellt.

Für diesen Beispielfall entspricht eine Lösung von HRP einer Lösung von HCP.

In **Fig. 1b** sind Lösungen zur HRP Instanz nach der vorhergehenden Figur dargestellt.

Instanzen bestehen aus Fakten über die folgenden Prädikate:

- CabinetDomainNew/1 definiert potenzielle Schränke, und

- roomDomainNew/1 definiert potenzielle Räume.

- thingLong/1 definiert Dinge, welche lang sind.

- legacyConfig/1 definiert alle anderen Daten in der Legacy-Konfiguration, beispielsweise definiert LegacyConfig(personTOthing(p1,t1)), dass Person p1 das Ding t1 besitzt.

- LegacyConfig(roomTOcabinet(r1,c1)) gibt ein Tupel in der Legacy-Zuordnung von Schränken zu Räumen an.

Die beiden wichtigsten Auswahlregeln, die die Zuordnung von Sachen zu Schränken und die Zuordnung von Schränken zu Räumen erraten, sehen wie folgt aus:

{ cabinetTOthing(C,T) } :- cabinetDomain(C), thing(T).

{ roomTOcabinet(R,C) } :- roomDomain(R), cabinet(C).

Um die Domänen von Schränken und Räumen als Vereinigung bestehender Objekte und neu verfügbarer Identifikatoren zu definieren, enthält das Encoding auch die folgenden Regeln:

cabinetDomain(C) :- cabinetDomainNew(C).

roomDomain(R) :- roomDomainNew(R).

Instanzen können optional Atome verschiedener Prädikate enthalten, um Kosten für bestimmte Aktionen zu definieren, wie beispielsweise das Platzieren eines Dings in einem Schrank, das Platzieren eines Schranks in einem Raum, das Wiederverwenden einer vorhandenen Platzierung eines Objekts in einem Schrank, das Wiederverwenden einer vorhandenen Platzierung eines Schranks in a Raum, Entfernen einer Sache aus einem Schrank, Entfernen eines Schranks aus einem Raum usw. Diese Kosten werden dann anhand der Differenz zwischen Lösung (TC,CR) und Legacy-Konfiguration (TC',CR') ermittelt. Eine schwache Einschränkung im Encoding weist den Solver an, die Kosten zu minimieren.

Um große Instanzen industrieller Probleme zu lösen, reicht der Einsatz eines sofort einsatzbereiten ASP-Solvers möglicherweise nicht aus. Ausgefeilte Kodierungen oder Solver-Tuning-Methoden (wie Portfolio-Lösung) sind gängige Methoden, um mit diesem Problem umzugehen.

Domänenspezifische Heuristiken sind eine weitere Möglichkeit, das Lösen von ASP-Encodings zu beschleunigen. Sie wurden sogar benötigt, um Durchbrüche bei der Lösung industrieller Konfigurationsprobleme mit ASP zu erzielen.

Es wurden mehrere Ansätze vorgeschlagen, um heuristisches Wissen in den ASP-Lösungsprozess einzubetten. HWASP erweitert WASP, indem es externe prozedurale Heuristiken erleichtert, die an bestimmten Punkten während des Lösungsprozesses über eine API konsultiert werden.

Die Veröffentlichung C. Dodaro, P. Gasteiger, N. Leone, B. Musitsch, F. Ricca, K. Schekotihin, Combining answer set programming and domain heuristics for solving hard industrial problems (application paper), Theory Pract. Log. Program. 16 (2016) 653-669. doi:10.1017/S1471068416000284 liefert überzeugende Effizienzsteigerungen auf einem automatisierten Weg mithilfe von HWASP.

Die Veröffentlichung M. Alviano, G. Amendola, C. Dodaro, N. Leone, M. Maratea, F. Ricca, Evaluation of disjunctive programs in WASP, in: M. Balduccini, Y. Lierler, S. Woltran (Eds.), Logic Programming and Nonmonotonic Reasoning - 15th International Conference, LPNMR 2019, Philadelphia, PA, USA, June 3-7, 2019, Proceedings, volume 11481 of Lecture Notes in Computer Science, Springer, 2019, pp. 241-255, doi:10.1007/978-3-030-20528-7_18 liefert Details zu WASP.

Einen deklarativen Ansatz zur Formulierung domänenspezifischer Heuristiken in ASP bietet das System CLINGO (ASP Solver), das heuristische Direktiven unterstützt. Heuristische Direktiven ermöglichen die deklarative Spezifikation von Gewichten, die Atom- und Polaritätspräferenzen in den entsprechenden internen Entscheidungsheuristiken eines Lösers bestimmen. Das Gewicht eines Atoms beeinflusst die Reihenfolge, in der Atome vom Solver bei der Entscheidungsfindung berücksichtigt werden. Ein Polaritätsmodifikator weist an, ob dem ausgewählten Atom der Wahrheitswert "wahr" oder "falsch" zugewiesen werden muss. Atomen mit einem höheren Gewicht wird ein Wert vor Atomen mit einem niedrigeren Gewicht zugewiesen.

Die Gleichung

$$\texttt{\#heuristic ha : hB. } [w@p,m] \qquad \text{(Gleichung 1)}$$

definiert die Syntax für (nicht-grundierte) heuristische Direktiven in CLINGO, wobei ha ein Atom ist, hB eine Konjunktion von Literalen ist, die den heuristischen Körper darstellen, und **w, p** und **m** Terme sind.

CLINGO ist im Stand der Technik bekannt, beispielsweise durch die Veröffentlichung M. Gebser, B. Kaufmann, J. Romero, R. Otero, T. Schaub, P.Wanko, Domain-specific heuristics in answer set programming, in: M. desJardins, M. L. Littman (Eds.), Proceedings of the Twenty-Seventh AAAI Conference on Artificial Intelligence, July 14-18, 2013, Bellevue, Washington, USA, AAAI Press, 2013, pp. 350-356.

URL:http://www.aaai.org/ocs/index.php/AAAI/AAAI13/paper/view/ 6278, abgerufen am 24.8.2022.

Weitere Details für die Syntax von heuristische Direktiven sind beispielsweise der Veröffentlichung M. Gebser, R. Kaminski, B. Kaufmann, M. Lindauer, M. Ostrowski, J. Romero, T. Schaub, S. Thiele, P. Wanko, Potassco guide version 2.2.0, 2019.

URL:https://github.com/potassco/guide/releases/tag/v2.2.0, abgerufen am 24.8.2022, zu entnehmen.

Der optionale Begriff **p** gibt eine Präferenz zwischen heuristischen Werten für dasselbe Atom an (bevorzugt diejenigen mit höherem **p).**

Der Begriff **m** gibt die Art der heuristischen Information an und kann die folgenden Werte annehmen: sign, level, true, false, init und factor.

Beispielsweise ermöglichen Heuristiken für **m**=init und **m**=factor das Modifizieren von anfänglichen und tatsächlichen Atomgewichten, die von der Entscheidungsheuristik des Solvers (wie "Variable State Independent Decaying Sum", kurz VSIDS) bewertet wurden.

Der Modifikator **m**=sign zwingt die Entscheidungsheuristik, einem Atom ha einen bestimmten Wahrheitswert zuzuweisen, je größer ein Wert des Gewichts **w,** desto früher muss ein Atom zugeordnet werden.

Schließlich gibt **m**=true an, dass *a* der Wert true mit Gewicht **w** zugewiesen werden sollte, wenn hB erfüllt ist, und **m**=false die analoge Heuristik ist, die *a* false zuweist.

Als neuer Ansatz wurden in den Veröffentlichungen R. Taupe, K. Schekotihin, P. Schüller, A. Weinzierl, G. Friedrich, Exploiting partial knowledge in declarative domain-specific heuristics for ASP, in: B. Bogaerts, E. Erdem, P. Fodor, A. Formisano, G. Ianni, D. Inclezan, G. Vidal, A. Villanueva, M. D. Vos, F. Yang (Eds.), Proceedings 35th International Conference on Logic Programming (Technical Communications), ICLP 2019 Technical Communications, Las Cruces, NM, USA, September 20-25, 2019, volume 306 of EPTCS, 2019, pp. 22-35. doi:10.4204/EPTCS.306.9, sowie

R. Taupe, G. Friedrich, K. Schekotihin, A. Weinzierl, Solving configuration problems with ASP and declarative domain specific heuristics, in: M. Aldanondo, A. A. Falkner, A. Felfernig, M. Stettinger (Eds.), Proceedings of the 23rd International Configuration Workshop (CWS/ConfWS 2021), Vienna, Austria, 16-17 September, 2021, volume 2945 of CEUR Workshop Proceedings, CEUR-WS.org, 2021, pp. 13-20. URL: http://ceur-ws.org/, Vol-2945/21-RT-ConfWS21_paper_4.pdf, abgerufen am 24.8.2022, und R. Comploi-Taupe, Speeding up lazy-grounding answer set solving, Ph.D. thesis, Alpen- Adria-Universität Klagenfurt, 2021, URL:https://digital.obvsg.at/urn/urn:nbn:at:at-ubk:1-41351, abgerufen am 24.8.2022, neue Semantiken für heuristische Direktiven, welche auf nicht-monotone Heuristiken abzielen, in das "lazy-gounding ASP-system ALPHA" eingeführt, basierend auf CLINGO, wobei diese neuen Semantiken durch Bezugnahme auf diese Veröffentlichungen als Teil der Offenbarung der Erfindung mit einbezogen werden.

Induktive Logikprogrammierung (engl. "Inductive Logic Programming", kurz ILP) ist ein Ansatz zum Erlernen eines Programms, das eine Reihe von Beispielen mit etwas Hintergrundwissen erklärt.

ILASP ist ein System, das ASP-Programme lernen kann, einschließlich normaler Regeln, Auswahlregeln und harter und schwacher Constraints.

ILASP ist im Stand der Technik als "Inductive Learning of Answer Set Programs" bekannt und Details dazu werden in der Veröffentlichung M. Law, A. Russo, K. Broda, The ILASP system for inductive learning of answer set programs, CoRR abs/2005.00904 (2020), abgerufen am 24.8.2022. arXiv:2005.00904 ausgeführt und durch Bezugnahme auf diese Veröffentlichungen als Teil der Offenbarung der Erfindung mit einbezogen.

ILASP arbeitet mit einer Lernaufgabe, die aus drei Komponenten besteht: Dem Hintergrundwissen **B** (ein bereits vor dem Lernen bekanntes ASP-Programm), dem Modus-Bias **M** (der ausdrückt, welche ASP-Programme gelernt werden können) und den Beispielen **E** (die Eigenschaften spezifizieren, die das erlernte Programm erfüllen muss). Wenn die durch ein bestimmtes Beispiel in **E** spezifizierten Eigenschaften erfüllt sind, wird das Beispiel als abgedeckt bezeichnet.

ILASP findet ein Programm (oft als Hypothese bezeichnet) *H*, so dass *B* $\cup$ *H* jedes Beispiel in *E* abdeckt (oder, wenn die Beispiele als verrauscht gelten, so dass die Gesamtstrafe von nicht abgedeckten Beispielen minimiert wird). *H* ist ein Element des durch **M** definierten Suchraums.

Ein "Mode Bias" umfasst eine Reihe von Modus-Deklarationen. Es gibt mehrere Arten von Modus-Deklarationen, wie aus der Veröffentlichung ILASP Limited, The ILASP manual, 2022. URL: https://doc.ilasp.com/, abgerufen am 24.8.2022, bekannt, von denen im vorliegenden Zusammenhang zwei verwenden werden: #modeh und #modeb geben an, wie die Köpfe bzw. die Körper der gelernten Regeln aussehen können. Ein Platzhalter ist ein Term var(t) oder const(t) für einen konstanten Term t. Solche Platzhalter können durch beliebige Variablen bzw. Konstanten vom Typ t ersetzt werden.

**Fig. 2** zeigt ein Beispiel für einen Programmcode eines Mode Bias für ein HRP.

Als einfaches Beispiel zeigt das Listing einen Teil des Mode Bias für eine Lernaufgabe für den HRP.

Die erste Modus-Deklaration gibt an, dass das binäre Prädikat CabinetTOthing im Kopf von Regeln verwendet werden kann und dass seine Terme vom Variablentyp Cabinet und Thing sind (in dieser Reihenfolge).

Die anderen beiden Modus-Deklarationen spezifizieren, welche Prädikate in den Körpern gelernter Regeln vorkommen können. Es können dieselben Begriffe in erlernten Regeln verwendet werden, wo immer dieselben Begriffstypen verwendet werden.

Somit besteht der durch die in Listing 1 angegebene Mode Bias definierte Regelraum aus der folgenden Regel: cabinetTOthing(V1,V2) :- cabinetDomainNew(V1), thing(V2).

Ein positives Beispiel ist eine #pos-Anweisung und ein negatives Beispiel eine #neg-Anweisung, wie in den Veröffentlichungen M. Law, A. Russo, K. Broda, The ILASP system for inductive learning of answer set programs, CoRR abs/2005.00904 (2020). arXiv:2005.00904, abgerufen am 24.8.2022, und ILASP Limited, The ILASP manual, 2022. URL: https://doc.ilasp.com/, abgerufen am 24.8.2022 hervorgeht.

Jedes Beispiel besteht aus mehreren Komponenten, von denen die folgenden im vorliegenden Zusammenhang relevant sind:

Ein Satz von Grundatomen, die als "inclusions" (Einschlüsse) bezeichnet werden, ein Satz von Grundatomen, die als "exclusions" (Ausschlüsse) bezeichnet werden, und ein optionaler Satz von Regeln (normalerweise nur Fakten), der als Kontext bezeichnet wird.

Ein positives Beispiel ist abgedeckt, wenn es mindestens ein Answer Set für **B** U *H* gibt, der alle Einschlüsse und keinen der Ausschlüsse enthält.

Ein negatives Beispiel besagt, dass es keine Antwortmenge geben darf, die alle ihre Einschlüsse und keine ihrer Ausschlüsse enthält.

Der Kontext ist die Probleminstanz, auf die sich die Ein- und Ausschlüsse beziehen (unter Berücksichtung der üblichen Unterscheidung zwischen unveränderlicher Problemkodierung und durch Fakten spezifizierten Probleminstanzen).

**Fig. 3** stellt ein vereinfachtes Beispiel für eine Lernaufgabe für HRP dar.

Das Listing zeigt ein vereinfachtes Beispiel für HRP, das besagt, dass CabinetTOthing(1,2) für die Probleminstanz wahr sein soll, in der CabinetDomainNew(1) und thing(2) wahr sind.

Im Weiteren wird nun auf das induktive Lernen von domänenspezifischen Heuristiken eingegangen.

Die Grundidee besteht darin, eine kleine, aber repräsentative Instanz eines Problems zu lösen, die resultierende Antwortmenge als positives Beispiel für induktives Lernen zu verwenden, eine Menge bestimmter Regeln zu lernen und die gelernten Regeln in deklarative heuristische Anweisungen in Form von Gleichung 1 zu transformieren.

Es wird davon ausgegangen, dass keine Beispiel-Identifizierungs-Elemente, anfordernde Beispiele oder verrauschte Beispiele verwendet werden.

Diese Heuristiken können dann verwendet werden, um das Lösen größerer/schwieriger Instanzen desselben Problems zu beschleunigen.

Der Regelraum für ILASP ist in diesem Ansatz wie folgt definiert:

- Alle Prädikate, die in den Köpfen von Wahlregeln vorkommen, können in den Köpfen von gelernten Regeln verwendet werden (#modeh).

- Alle (anderen) Prädikate, die im Originalprogramm vorkommen, können in den Körpern der gelernten Regeln (#modeb) verwendet werden.

- Derselbe Variablentyp wird mehrmals verwendet, wenn eine Variable dasselbe reale Konzept bezeichnet.

Der Kopf enthält einer Auswahlregel eine Sammlung von Auswahlelementen, jedes in der Form *a: l*1*, . . . , lk*.

Die für *a* verwendeten Prädikate sind diejenigen, die in den Köpfen gelernter Regeln verwendet werden können.

Die Veröffentlichung F. Calimeri, W. Faber, M. Gebser, G. Ianni, R. Kaminski, T. Krennwallner, N. Leone, M. Maratea, F. Ricca, T. Schaub, ASP-Core-2 input language format, Theory Pract. Log. Program. 20 (2020) 294-309. doi:10.1017/S1471068419000450 umfasst weitere Details zur Form und Syntax der Regel, wobei diese Syntax durch Bezugnahme auf diese Veröffentlichungen als Teil der Offenbarung der Erfindung mit einbezogen wird

Das Hintergrundwissen ist das ursprüngliche Programm ohne jegliche Instanz, wobei Regeln mit Aggregaten entfernt wurden, da sie von ilasp nicht unterstützt werden. Details zur Syntax für das Hintergrundwissen dazu siehe https://doc.ilasp.com/specification/background.html, abgerufen am 24.8.2022, wobei diese Syntax durch Bezugnahme auf diese Veröffentlichungen als Teil der Offenbarung der Erfindung mit einbezogen wird.

Wahlregeln wurden jedoch nicht aufgenommen, weil wir beobachtet haben, dass ILASP in unserer Beispieldomäne nur dann etwas lernt, wenn Wahlregeln nicht Teil des Hintergrundwissens sind. Es wird angenommen, dass dies daran liegt, dass wir ein wenig von der vollständigen Problemspezifikation abstrahieren müssen, um einen Teil der fehlenden Informationen zu lernen. Constraints wurden ebenfalls nicht aufgenommen, weil die Regeln, die erlernt werden sollen, nicht alle Constraints des Programms erfüllen müssen.

Wenn sie als Heuristik verwendet werden, reicht es für sie aus, einen allgemeinen Hinweis darauf zu geben, welche Entscheidungen beim Lösen nützlich sein könnten, selbst wenn einige dieser Entscheidungen zurückverfolgt werden müssen.

Als positives Beispiel für das Lernen wird ein Answer Set für eine kleine, aber repräsentative Probleminstanz verwendet.

Falls das zugrunde liegende Problem ein Optimierungsproblem ist, wie das vorher beschriebene HRP, soll ein (annähernd) optimales Answer Set für diesen Prozess verwendet werden.

Die (noch unbewiesene) Hypothese ist, dass das Lernen aus besseren Answer Sets zu besseren Heuristiken führt.

Es werden kontextabhängige Beispiele verwendet; der Kontext wird durch die Probleminstanz angegeben. Die Menge der Einschlüsse entspricht der gesamten Antwortmenge, und die Menge der Ausschlüsse ist leer.

Bezogen auf das vorher genannte House Reconfiguration Problem (HRP) heißt die kleinste Instanz "ec-0001-house-t0100"; es ist eine HCP-Instanz (das heißt es enthält keine Legacy-Konfiguration) und enthält 100 Dinge, die auf 20 Personen verteilt sind.

Der optimale Antwortsatz für diesen Fall wurde von CLINGO berechnet und als einzelnes positives Beispiel verwendet.

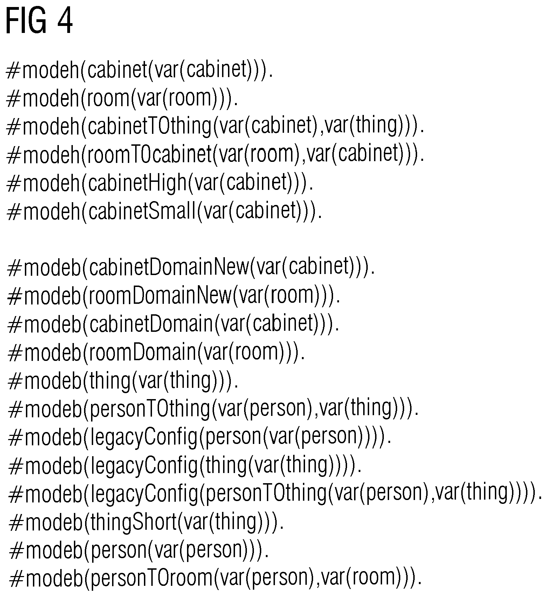

**Fig. 4** zeigt ein Beispiel für einen Programmcode eines "Full Mode Bias" für ein HRP.

Einige Prädikate, die unerwartet nützlich sind, wurden nicht in die gesamte ("engl. "full") Mode Bias aufgenommen, um den Suchraum in einem zulässigen Bereich zu halten und somit die Lösungsleistung von ILASP zu verbessern. Einige andere Prädikate wurden entfernt, da sie zu Lernregeln führten, die im Domänenkontext keinen Sinn machten.

Die resultierende Lernaufgabe war dennoch so groß, dass ILASP mehr als eine Stunde benötigte, um die Lösung zu finden.

Daher wurde damit experimentiert, von noch kleineren Varianten der Probleminstanz zu lernen. Demzufolge wurde die Instanz einfach verkleinert, indem Teile der Fakten entfernt wurden, während wir die allgemeine Struktur der Instanz beibehalten. Von den ursprünglich 100 Dingen wurden nur die ersten vier aufbewahrt, einschließlich ihrer Beziehungen zu Personen und der Personen selbst. Auch die Domänen für neue Objekte wurden deutlich reduziert. Die resultierende Lernaufgabe konnte von ILASP innerhalb von Sekunden gelöst werden und lieferte die gleiche Hypothese wie die vollständige Lernaufgabe.

ilasp wurde mit den Argumenten --no-constraints --noaggregates --version=4 verwendet, d. h. mit Version 4 des Lernalgorithmus und ohne Einschränkungen und Aggregate (Auswahlregeln) aus dem Suchraum.

Die folgenden Regeln bilden die gelernte Hypothese:

cabinetSmall(V1) :- cabinetDomainNew(V1).

cabinetTOthing(V1,V2) :- cabinetDomain(V1),

legacyConfig(personTOthing(V3,V2)).

roomTOcabinet(V1,V2) :- roomDomainNew(V1), cabinetDomain(V2).

Als nächsten Schritt wurden diese Regeln in Heuristiken in Form von Gleichung 1 manuell transformiert, indem der Kopf jeder Regel als ha und der Körper als hB verwendet wird.

Da die Köpfe der Heuristiken irgendwann wahr werden sollen, verwenden wir den Modifikator wahr.

Und an dieser Stelle keine Informationen zur Priorisierung der Heuristiken vorleigt, bekommen alle das gleiche Gewicht 1.

```
#heuristic cabinetSmall(V1) :
 cabinetDomainNew(V1). [1,true]
#heuristic cabinetTOthing(V1,V2) :
 cabinetDomain(V1), legacyConfig(personTOthing(V3,V2)). [1,true]
#heuristic roomTOcabinet(V1,V2) :
 roomDomainNew(V1), cabinetDomain(V2). [1,true]
```

Die erlernten Heuristiken weisen den Solver an, zu versuchen, so viele kleine Schränke wie möglich zu erstellen und alle möglichen Schrank-zu-Ding- und Raum-zu-Schrank-Zuweisungen zu versuchen.

Um die Auswirkungen der erlernten Heuristiken zu testen, wurden mit CLINGO alle verfügbaren HRP-Instanzen (94 an der Zahl) mit und ohne die erlernten Heuristiken gelöst.

Die HRP-Instanzen stammen aus früheren Experimenten, welche in den Veröffentlichungen R. Taupe, G. Friedrich, K. Schekotihin, A. Weinzierl, Solving configuration problems with ASP and declarative domain specific heuristics, in: M. Aldanondo, A. A. Falkner, A. Felfernig, M. Stettinger (Eds.), Proceedings of the 23rd International Configuration Workshop (CWS/ConfWS 2021), Vienna, Austria, 16-17 September, 2021, volume 2945 of CEUR Workshop Proceedings, CEUR-WS.org, 2021, pp. 13-20. URL: http://ceur-ws.org/Vol-2945/21-RT-ConfWS21 paper 4.pdf, abgerufen am 24.8.2022, und R. Comploi-Taupe, Speeding up lazy-grounding answer set solving, Ph.D. thesis, Alpen-Adria-Universität Klagenfurt, 2021.

URL:https://digital.obvsg.at/urn/urn:nbn:at:at-ubk:1-41351, abgerufen am 24.8.2022, verfügbar sind.

Diese Instanzen wurden nach dem Muster der Originalinstanzen generiert, siehe dazu die Veröffentlichung G. Friedrich, A. Ryabokon, A. A. Falkner, A. Haselböck, G. Schenner, H. Schreiner, (re)configuration using answer set programming, in: K. M. Shchekotykhin, D. Jannach, M. Zanker (Eds.), Proceedings of the IJCAI 2011 Workshop on Configuration, Barcelona, Spain, July 16, 2011, volume 755 of CEUR Workshop Proceedings, CEUR-WS.org, 2011, pp.17-24. URL: http://ceur-ws.org/Vol-755/paper03.pdf, abgerufen am 24.8.2022.

Dieses Muster stellt vier verschiedene Rekonfigurations-Szenarien dar, die in der Praxis anzutreffen sind, und die Instanzen sind abstrahierte reale Instanzen. Die Instanzen ins diesem Beispiel sind jedoch erheblich größer als die ursprünglichen (bis zu 800 Dinge, während die ursprünglichen Instanzen höchstens 280 Dinge verwendeten).

Der Computer, auf dem die Experimente durchgeführt wurden, war mit einer Intel® Core i7-6820HQ-CPU mit vier Kernen und 16 GiB Speicher ausgestattet und lief unter Linux Mint 20.2. CLINGO wurde angewiesen, nach dem optimalen Antwortsatz zu suchen, indem ihm eine Codierung mit einer schwachen Einschränkung gegeben wurde.

Das System wurde in seiner Standardkonfiguration verwendet, d.h. abgesehen von Dateinamen und der in diesem Abschnitt beschriebenen Parametrierung wurden keine zusätzlichen Kommandozeilenargumente verwendet.

Der Parameter --heu=Domain wurde verwendet, um eine Konfiguration zu erreichen, in der CLINGO die domänenspezifischen Heuristiken verwendete (und eine, in der dies nicht der Fall war). Nach 180 Sekunden pro Instanz wurde die Suche mit dem Parameter --time von CLINGO abgebrochen und der Optimierungswert der bisher besten gefundenen Lösung festgehalten.

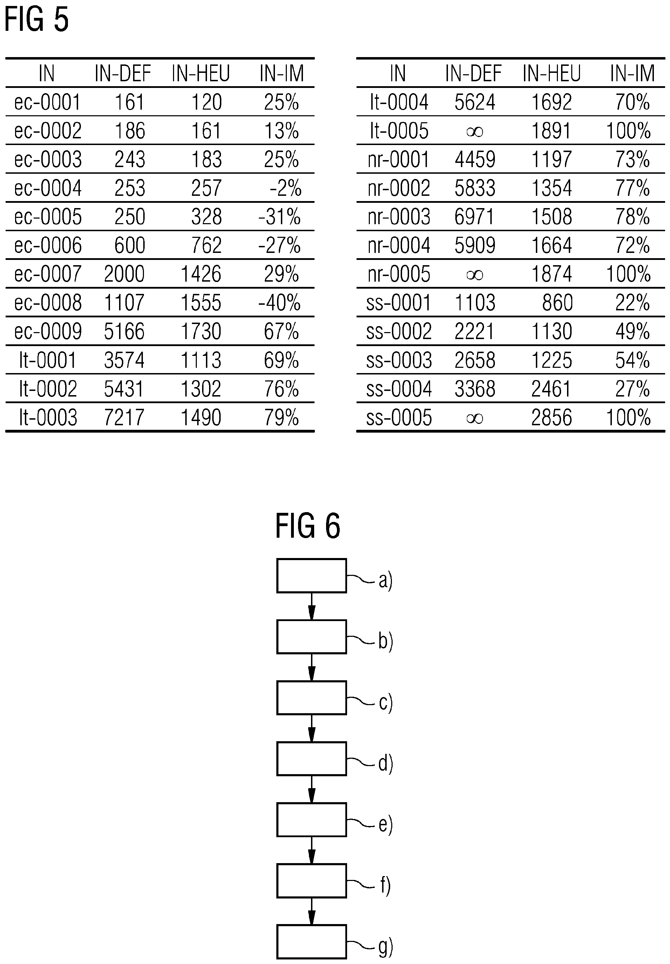

**Fig. 5** zeigt eine Tabelle mit experimentell ermittelten optimierungs-Ergebnissen von erlernten Heuristiken und deren relative Verbesserung.

Die Tabelle zeigt die erzielten Optimierungswerte und die relative Verbesserung bei Anwendung der gelernten Heuristiken für alle 24 Instanzen, die mit oder ohne domänenspezifische Heuristiken gelöst werden konnten. Für die anderen 70 Instanzen konnte so oder so kein Antwortsatz gefunden werden; daher sind sie nicht in der Tabelle enthalten.

Die erste Spalte zeigt die Instanz-Kennung IN. Die ersten beiden Zeichen jeder Kennung beziehen sich auf eine der vier Instanz-Klassen des HRP. Der numerische Teil des Bezeichners nimmt mit zunehmender Instanz-Größe zu.

Die zweite und dritte Spalte enthalten die erzielten Optimierungswerte ohne bzw. mit gelernter Heuristik IN-DEF beziehungsweise IN-HEU. Das Symbol ∞ (unendlich) wird verwendet, wenn innerhalb des Zeitlimits von 180 Sekunden kein Antwortsatz gefunden werden konnte.

Die vierte Spalte zeigt die Änderung des Optimierungswerts bei Verwendung der erlernten Heuristiken relativ zum Lösen ohne domänenspezifische Heuristiken. Ein positiver Prozentsatz bedeutet eine Verbesserung, negative Werte eine Verschlechterung. Der Wert 100 % wird in Fällen verwendet, in denen eine Antwortmenge nur unter Verwendung von Heuristiken gefunden werden konnte.

Die erlernten Heuristiken scheinen sehr positive Effekte zu haben, obwohl sie (noch) unkompliziert sind.

Die durchschnittliche Kostenverbesserung über alle Instanzen beträgt 46 %. Interessanterweise ist die einfachste Instanzklasse "ec" die einzige, bei der sich die Lösungsqualität bei Anwendung der gelernten Heuristiken nicht für jede Instanz verbesserte, obwohl eine Instanz dieser Klasse zum Lernen verwendet wurde.

Bei Instanzen, die nicht zur Instanzklasse "ec" gehören, beträgt die durchschnittliche Verbesserung sogar 70 %.

Neben unseren Experimenten mit CLINGO haben wir auch mit dem Lazy-Grounding-ASP-System Alpha gemäß der Veröffentlichung A. Weinzierl, Blending lazy-grounding and CDNL search for answer-set solving, in: M. Balduccini, T. Janhunen (Eds.), Logic Programming and Nonmonotonic Reasoning - 14th International Conference, LPNMR 2017, Espoo, Finland, July 3-6, 2017, Proceedings, volume 10377 of Lecture Notes in Computer Science, Springer, 2017, pp. 191-204. doi:10. 1007/978-3-319-61660-5_17. [11] experimentiert. Dieses System akzeptiert heuristische Direktiven in einer etwas anderen Syntax.

Alpha konnte jedoch keine der betrachteten HRP-Instanzen ohne domänenspezifische Heuristiken lösen, und die durch unseren Ansatz erlernten Heuristiken reichten nicht aus, um diese Situation zu verbessern.

**Fig. 6** stellt ein Ausführungsbeispiel für ein Ablaufdiagramm des erfindungsgemäßen Verfahrens dar.

Das computer-implementiertes Verfahren zur Herstellung eines Produkts mithilfe von zumindest einer Produktionsvorrichtung und einer zugehörigen Konfiguration umfasst folgende Schritte:

a) Bereitstellen eines ersten Encodings für die Herstellung des Produkts durch die zumindest eine Produktionsvorrichtung und der zugehörigen Konfiguration auf Basis von "Answer Set Programming",
b) Bereitstellen von zumindest einem zweiten Encoding auf Basis von "Answer Set Programming", welches eine Teilmenge des ersten Encodings bildet,
c) Lösen der zweiten Encodings durch einen Solver auf Basis von "Answer Set Programming",
d) Anwenden von "Inductive Logic Programming" zur Bestimmung von Regeln zur Lösung nach Schritt c)
e) Bilden einer heuristischen Repräsentation der Regeln für die Lösungen nach Schritt d),

f) Lösen des ersten Encodings als Herstellungs-Konfiguration der Produktionsvorrichtungen durch einen Solver auf Basis von "Answer Set Programming" unter Zuhilfenahme der heuristischen Repräsentation der Regeln für die Lösungen der zweiten Encodings nach Schritt e),

g) Herstellen des Produkts mithilfe der Herstellungs-Konfiguration und der Produktionsvorrichtungen.

Das erste Encoding kann eine Beschreibung des Produkts, insbesondere dessen Menge an Komponenten des Produkts und deren Konfiguration, und eine Beschreibung der zumindest einen Produktionsvorrichtung, insbesondere deren Menge an Maschinen und deren Konfiguration, und vorzugsweise erste Constraints umfassen.

Das zumindest eine zweite Encoding kann eine Beschreibung eines Teils des Produkts, insbesondere dessen Menge an Komponenten des Teils des Produkts und deren Konfiguration, und eine Beschreibung der zumindest einen Produktionsvorrichtung, insbesondere deren Menge an Maschinen und deren Konfiguration, und vorzugsweise zweite Constraints umfassen.

Mit Encodings können auch Problem-Instanzen gemeint sein.

Für die weiter oben angeführten Bezugnahmen auf Veröffentlichungen, welche als Teil der Offenbarung der Erfindung einbezogen werden, bedeutet das, dass deren Inhalt hiermit in diese Anmeldung aufgenommen wird.

**Bezugszeichenliste:**

| | |
|---|---|
| p1, p2 | Person |
| t1-t6 | Ding (engl. "thing") |
| c1, c2 | Schrank (engl. "cabinet") |
| r1, r2 | Raum |
| IN | Instanz |
| IN-DEF | Definition |
| IN-HEU | Heuristik |
| IN-IM | Verbesserung |
| a) - g) | Verfahrensschritte |

**Patentansprüche**

1. Computer-implementiertes Verfahren zur Herstellung eines Produkts mithilfe von zumindest einer Produktionsvorrichtung und einer zugehörigen Konfiguration, umfassend folgende Schritte:

   a) Bereitstellen eines ersten Encodings für die Herstellung des Produkts durch die zumindest eine Produktionsvorrichtung und der zugehörigen Konfiguration auf Basis von "Answer Set Programming",
   b) Bereitstellen von zumindest einem zweiten Encoding auf Basis von "Answer Set Programming", welches eine Teilmenge des ersten Encodings bildet,
   c) Lösen der zweiten Encodings durch einen Solver auf Basis von "Answer Set Programming",
   d) Anwenden von "Inductive Logic Programming" zur Bestimmung von Regeln zur Lösung nach Schritt c),
   e) Bilden einer heuristischen Repräsentation der Regeln für die Lösungen nach Schritt d),
   f) Lösen des ersten Encodings als Herstellungs-Konfiguration der Produktionsvorrichtungen durch einen Solver auf Basis von "Answer Set Programming" unter Zuhilfenahme der heuristischen Repräsentation der Regeln für die Lösungen der zweiten Encodings nach Schritt e),
   g) Herstellen des Produkts mithilfe der Herstellungs-Konfiguration und der Produktionsvorrichtungen.

2. Verfahren nach dem vorhergehenden Anspruch, wobei das erste Encoding eine Beschreibung des Produkts, insbesondere dessen Menge an Komponenten des Produkts und deren Konfiguration, und eine Beschreibung der zumindest einen Produktionsvorrichtung, insbesondere deren Menge an Maschinen und deren Konfiguration, und vorzugsweise erste Constraints umfasst.

3. Verfahren nach einem der vorhergehenden Ansprüche, wobei das zumindest eine zweite Encoding eine Beschreibung eines Teils des Produkts, insbesondere dessen Menge an Komponenten des Teils des Produkts und deren Konfiguration, und eine Beschreibung der zumindest einen Produktionsvorrichtung, insbesondere deren Menge an Maschinen und deren Konfiguration, und vorzugsweise zweite Constraints umfasst.

4. Verfahren nach einem der vorhergehenden Ansprüche, wobei die heuristische Repräsentation der Regeln im Schritt e) durch einen Kopf und einen Körper gebildet ist.

5. Herstellungs-System, umfassend zumindest eine Produktionsvorrichtung und eine zugehörige Konfiguration, eine Rechenvorrichtung mit einem Speicher, wobei die Produktionsvorrichtung und die Rechenvorrichtung dazu eingerichtet sind, das Verfahren nach einem der vorhergehenden Ansprüche auszuführen.

6. Computerprogramm gelöst, umfassend Befehle, welche bei deren Ausführung durch einen Computer diesen veranlassen, das Verfahren nach einem Ansprüche 1 bis 4 auszuführen.

7. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem Ansprüche 1 bis 4 durchführen.

8. Datenträgersignal, welches das Computerprogramm nach Anspruch 6 überträgt.

# FIG 1A

# FIG 1B

# FIG 2

#modeh(cabinetTOthing(var(cabinet),var(thing))).
#modeb(cabinetDomainNew(var(cabinet))).
#modeb(thing(var(thing))).

# FIG 3

```
#pos(
{ cabinetTOthing(1,2) },          % inclusions
{ },                              % exclusions
{ cabinetDomainNew(1). thing(2). }  % context
).
```

# FIG 4

```
#modeh(cabinet(var(cabinet))).
#modeh(room(var(room))).
#modeh(cabinetTOthing(var(cabinet),var(thing))).
#modeh(roomTOcabinet(var(room),var(cabinet))).
#modeh(cabinetHigh(var(cabinet))).
#modeh(cabinetSmall(var(cabinet))).

#modeb(cabinetDomainNew(var(cabinet))).
#modeb(roomDomainNew(var(room))).
#modeb(cabinetDomain(var(cabinet))).
#modeb(roomDomain(var(room))).
#modeb(thing(var(thing))).
#modeb(personTOthing(var(person),var(thing))).
#modeb(legacyConfig(person(var(person)))).
#modeb(legacyConfig(thing(var(thing)))).
#modeb(legacyConfig(personTOthing(var(person),var(thing)))).
#modeb(thingShort(var(thing))).
#modeb(person(var(person))).
#modeb(personTOroom(var(person),var(room))).
```

# FIG 5

| IN | IN-DEF | IN-HEU | IN-IM |
|---|---|---|---|
| ec-0001 | 161 | 120 | 25% |
| ec-0002 | 186 | 161 | 13% |
| ec-0003 | 243 | 183 | 25% |
| ec-0004 | 253 | 257 | -2% |
| ec-0005 | 250 | 328 | -31% |
| ec-0006 | 600 | 762 | -27% |
| ec-0007 | 2000 | 1426 | 29% |
| ec-0008 | 1107 | 1555 | -40% |
| ec-0009 | 5166 | 1730 | 67% |
| lt-0001 | 3574 | 1113 | 69% |
| lt-0002 | 5431 | 1302 | 76% |
| lt-0003 | 7217 | 1490 | 79% |

| IN | IN-DEF | IN-HEU | IN-IM |
|---|---|---|---|
| lt-0004 | 5624 | 1692 | 70% |
| lt-0005 | ∞ | 1891 | 100% |
| nr-0001 | 4459 | 1197 | 73% |
| nr-0002 | 5833 | 1354 | 77% |
| nr-0003 | 6971 | 1508 | 78% |
| nr-0004 | 5909 | 1664 | 72% |
| nr-0005 | ∞ | 1874 | 100% |
| ss-0001 | 1103 | 860 | 22% |
| ss-0002 | 2221 | 1130 | 49% |
| ss-0003 | 2658 | 1225 | 54% |
| ss-0004 | 3368 | 2461 | 27% |
| ss-0005 | ∞ | 2856 | 100% |

# FIG 6

Europäisches
Patentamt
European
Patent Office
Office européen
des brevets

**Nummer der Anmeldung**

**EP 22 19 3068**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TARZARIOL ALICE ET AL: "Lifting symmetry breaking constraints with inductive logic programming", MACHINE LEARNING, SPRINGER US, NEW YORK, Bd. 111, Nr. 4, 1. April 2022 (2022-04-01), Seiten 1303-1326, XP037848537, ISSN: 0885-6125, DOI: 10.1007/S10994-022-06146-3 [gefunden am 2022-04-19] * Abschnitte 1, 3 und 4 * ----- | 1-8 | INV. G05B19/418 |
| A | GENÇAY ERAY ET AL: "Applications of non-monotonic reasoning to automotive product configuration using answer set programming", JOURNAL OF INTELLIGENT MANUFACTURING, SPRINGER US, NEW YORK, Bd. 30, Nr. 3, 20. Mai 2017 (2017-05-20), Seiten 1407-1422, XP036942329, ISSN: 0956-5515, DOI: 10.1007/S10845-017-1333-3 [gefunden am 2017-05-20] * Seite 1407 – Seite 1410 * * Seite 1413 – Seite 1419 * ----- | 1-8 | |
| A | ANTONIUS WEINZIERL ET AL: "Advancing Lazy-Grounding ASP Solving Techniques -- Restarts, Phase Saving, Heuristics, and More", ARXIV.ORG, CORNELL UNIVERSITY LIBRARY, 201 OLIN LIBRARY CORNELL UNIVERSITY ITHACA, NY 14853, 8. August 2020 (2020-08-08), XP081737088, * Abschnitte 1 bis 3. * ----- | 1-8 | **RECHERCHIERTE SACHGEBIETE (IPC)** G05B |
| A | EP 3 951 525 A1 (SIEMENS AG OESTERREICH [AT]) 9. Februar 2022 (2022-02-09) * das ganze Dokument * ----- | 1-8 | |

Der vorliegende Recherchenbericht wurde für alle Patentansprüche erstellt

| Recherchenort | Abschlußdatum der Recherche | Prüfer |
|---|---|---|
| Den Haag | 3. Februar 2023 | Prokopiou, Platon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 3068

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2023

| Im Recherchenbericht angeführtes Patentdokument | Datum der Veröffentlichung | Mitglied(er) der Patentfamilie | Datum der Veröffentlichung |
|---|---|---|---|
| EP 3951525 A1 | 09-02-2022 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. GELFOND ; Y. KAHL.** Knowledge Representation, Reasoning, and the Design of Intelligent Agents: The Answer-Set Programming Approach. Cambridge University Press, 2014
- **V. LIFSCHITZ.** Answer Set Programming. Springer, 2019
- **M. GEBSER ; R. KAMINSKI ; B. KAUFMANN ; T. SCHAUB.** Answer Set Solving in Practice, Synthesis Lectures on Artificial Intelligence and Machine Learning. Morgan and Claypool Publishers, 2012
- **C. BARAL.** Knowledge Representation, Reasoning and Declarative Problem Solving. Cambridge University Press, 2003
- **M. LAW ; A. RUSSO ; K. BRODA.** The ILASP system for inductive learning of answer set programs. *arXiv:2005.00904,* 2020
- **M. LAW.** Conflict-driven inductive logic programming. *Theory and Practice of Logic Programming,* 2022
- Ph.D. thesis. Alpen-Adria-Universität Klagenfurt, 2015
- Proceedings of the IJCAI 2011 Workshop on Configuration, Barcelona, Spain. 16. Juli 2011, vol. 755, 17-24
- **C. DODARO ; P. GASTEIGER ; N. LEONE ; B. MUSITSCH ; F. RICCA ; K. SCHEKOTIHIN.** Combining answer set programming and domain heuristics for solving hard industrial problems (application paper). *Theory Pract. Log. Program.,* 2016, vol. 16, 653-669
- Evaluation of disjunctive programs in WASP. **M. ALVIANO ; G. AMENDOLA ; C. DODARO ; N. LEONE ; M. MARATEA ; F. RICCA.** Logic Programming and Nonmonotonic Reasoning - 15th International Conference, LPNMR 2019, Philadelphia, PA, USA. Springer, 03. Juni 2019, vol. 11481, 241-255
- Domain-specific heuristics in answer set programming. **M. GEBSER ; B. KAUFMANN ; J. ROMERO ; R. OTERO ; T. SCHAUB ; P.WANKO.** Proceedings of the Twenty-Seventh AAAI Conference on Artificial Intelligence. AAAI Press, 2013, 350-356
- **M. GEBSER ; R. KAMINSKI ; B. KAUFMANN ; M. LINDAUER ; M. OSTROWSKI ; J. ROMERO ; T. SCHAUB ; S. THIELE ; P. WANKO.** *Potassco guide version 2.2.0,* 2019
- Exploiting partial knowledge in declarative domain-specific heuristics for ASP. **R. TAUPE ; K. SCHEKOTIHIN ; P. SCHÜLLER ; A. WEINZIERL ; G. FRIEDRICH.** Proceedings 35th International Conference on Logic Programming (Technical Communications), ICLP 2019 Technical Communications, Las Cruces, NM, USA. EPTCS, 20. September 2019, vol. 306, 22-35
- Solving configuration problems with ASP and declarative domain specific heuristics. **R. TAUPE ; G. FRIEDRICH ; K. SCHEKOTIHIN ; A. WEINZIERL.** Proceedings of the 23rd International Configuration Workshop (CWS/ConfWS 2021), Vienna, Austria. 16. September 2021, vol. 2945, 13-20
- Speeding up lazy-grounding answer set solving. **R. COMPLOI-TAUPE.** Ph.D. thesis. Alpen- Adria-Universität, 2021
- **M. LAW ; A. RUSSO ; K. BRODA.** The ILASP system for inductive learning of answer set programs. *Xiv:2005.00904,* 2020
- The ILASP manual. ILASP Limited, 24. August 2022
- **F. CALIMERI ; W. FABER ; M. GEBSER ; G. IANNI ; R. KAMINSKI ; T. KRENNWALLNER ; N. LEONE ; M. MARATEA ; F. RICCA ; T. SCHAUB.** ASP-Core-2 input language format. *Theory Pract. Log. Program.,* 2020, vol. 20, 294-309
- Speeding up lazy-grounding answer set solving. **R. COMPLOI-TAUPE.** Ph.D. thesis. Alpen-Adria-Universität, 2021
- re)configuration using answer set programming. **G. FRIEDRICH ; A. RYABOKON ; A. A. FALKNER ; A. HASELBÖCK ; G. SCHENNER ; H. SCHREINER.** Proceedings of the IJCAI 2011 Workshop on Configuration, Barcelona, Spain. 16. Juli 2011, vol. 755, 17-24
- Blending lazy-grounding and CDNL search for answer-set solving. **A. WEINZIERL.** Logic Programming and Nonmonotonic Reasoning - 14th International Conference, LPNMR 2017, Espoo, Finland. Springer, 03. Juli 2017, vol. 10377, 191-204